# EUROPEAN PATENT APPLICATION

(11) **EP 1 693 212 A1**
(43) Date of publication of application: **23.08.2006**
(21) Application number: 06003037.6
(22) Date of filing: 15.02.2006
(51) Int. Cl.: B41J 2/175, B01D 29/01

(54) **Method of manufacturing filter, and filter**

(30) Priority: 15.02.2005 JP 2005037309
(71) Applicant: SEIKO EPSON CORPORATION, Shinjuku-ku, Tokyo 163-0811 (JP)
(72) Inventor: Okazawa, Noriaki, Suwa-shi, Nagano 392-8502 (JP); Akase, Takashi, Suwa-shi, Nagano 392-8502 (JP)
(74) Representative: HOFFMANN EITLE

(57) **Abstract**

A first sheet and a second sheet are prepared. First holes on the first sheet are perforated. The second sheet is laminated on the first sheet so as to cover at least the first holes and to form a laminated body. The filters are punched from the laminated body such that each of the filters comprises the first sheet formed with at least one of the first holes and the second sheet.

## Description

### BACKGROUND OF THE INVENTION

The present invention relates to a method of manufacturing a filter and the filter used in a liquid ejecting head that ejects mainly liquid supplied from a liquid cartridge or the like as a liquid droplet.

As a liquid ejecting device, an inkjet recording device having an inkjet recording head for image recording is well known. In addition, a device having a pigment-ejecting head used in manufacturing a color filter such as liquid crystal display or the like; a device having an electrode material (conductive paste)-ejecting head used in forming an electrode such as organic EL display, field emission display (FED) or the like; a device having a living organic material-ejecting head used in manufacturing a biochip; a device having a specimen-ejecting head as a micro pipette or the like are also well known.

In the inkjet recording device, a typical example of the liquid-ejecting device, an inkjet recording head (liquid-ejecting head) mounted on a carriage includes a pressure generating unit that pressurizes a pressure generating chamber and a nozzle opening that ejects pressurized ink as an ink droplet.

In addition, the recording head includes a head body that ejects the ink as an ink droplet; and an ink cartridge that stores the ink to be supplied to the head body. Furthermore, the recording head is provided with an ink supply needle, and the ink cartridge is provided with an ink supply opening so that the ink is supplied to the head body through the ink supply needle inserted into the ink supply opening.

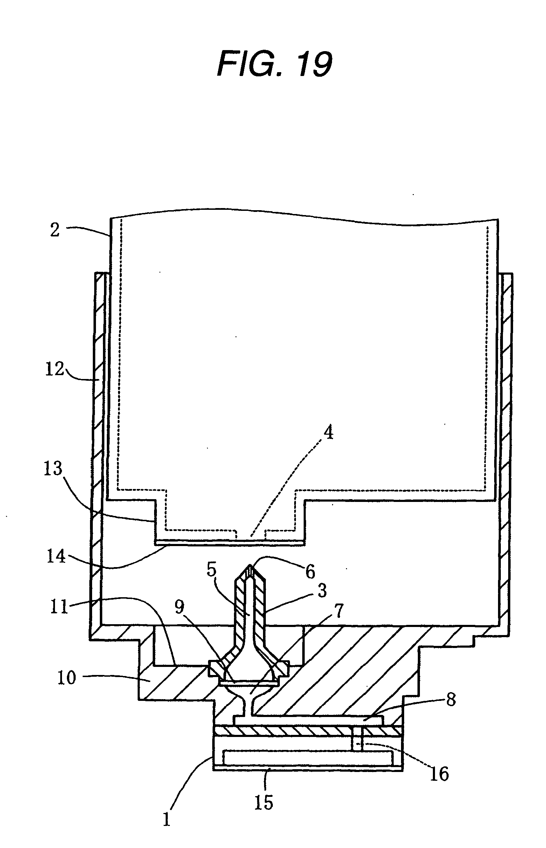

For example, as shown in Fig. 19, in the recording head, a head body 1, which ejects the ink droplets on the basis of printing signals, is attached to the lower surface of a head holder 10 of the recording head, and a cartridge case 12 in which the ink cartridge 2 is received is provided on the upper side of the head holder 10. A positioning protrusion 13 is formed on the lower surface of the ink cartridge 2, and the ink supply opening 4 is formed on the lower surface of the positioning protrusion 13. The opening of the ink supply opening 4 is sealed with a film 14 until the ink cartridge 2 is loaded on the recording head.

Meanwhile, a recess 11, into which the positioning protrusion 13 is fitted, is formed on the upper surface of the head holder 10, and the ink supply needle 3 is extended from a bottom of the recess 11. Fig. 19 shows a state that the ink cartridge 2 is not loaded in the cartridge case.

The tip end of the ink supply needle 3 is formed in the shape of a circular cone so as to pierce the film 14 of the ink supply opening 4 easily. In addition, an ink guide hole 6 is vertically bored at the slope face of the tip end. A first ink channel 5 communicating with the ink guide hole 6 is formed at the inside of the ink supply needle 3, and a second ink channel 7, which supplies the ink guided into the first ink channel 5 of the ink supply needle 3 to the head body 1, is formed at the head holder 10.

A filter 9 is provided at the inlet of the second ink channel 7 to trap foreign material by filtering the ink, which is supplied from the ink cartridge 2.

In addition, a communication channel 8 communicating with the second ink channel 7 is formed on the lower surface of the head holder 10. Furthermore, the ink flowing into the communication channel 8 is supplied to the head body 1 through the ink supply tube 16 provided in the head body 1.

In the above recording head, when the ink cartridge 2 is loaded, the tip end of the ink supply needle 3 pierces the film 14 that seals the ink supply opening 4 of the ink cartridge 2, and thus the ink supply needle 3 is inserted through the ink supply opening 4. In addition, the ink in the ink cartridge 2 is supplied to the head body 1 through the ink guide hole 6 of the ink supply needle 3, the first ink channel 5, the second ink channel 7 and the communication channel 8.

The recording head is mounted on a carriage (not shown) with the ink cartridge 2 and performs printing by ejecting an ink droplet from the nozzle opening provided at a nozzle plate 15 of the head body 1 while reciprocating in the widthwise direction of a recording sheet by the carriage. The ink consumed for the printing is supplied to the head body 1 through the first and second ink channels 5 and 7 from the ink cartridge 2.

The recording head includes a metal filter 9 formed with fine meshes to trap foreign materials having a size of φ 10µm or more, which can flow into from the ink cartridge 2 or the like. Since the metal mesh filter 9 has a large fluid resistance, the area of the filter needs to be made as large as possible in order to make the pressure loss at the time of ink-ejecting as small as possible. Therefore, the diameters of the first ink channel 5 and the second channel 7 are enlarged toward the filter 9.

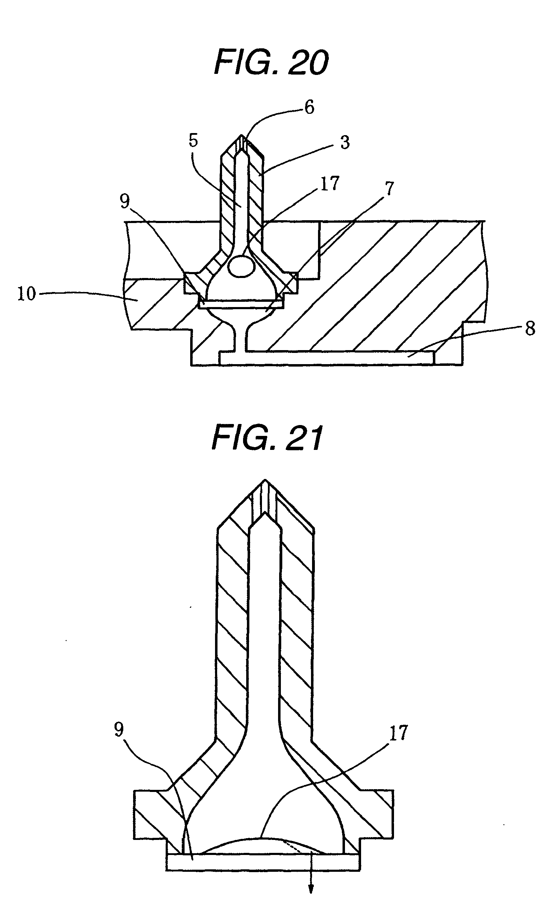

Meanwhile, as shown in Fig. 20, a channel space at the upstream of the filter 9 traps an air bubble 17 flowed downward from the ink cartridge 2 or the like. If the air bubble stays and grows in the channel space, the air bubble 17 passes through the filter 9 and flows into the head body 1 by the ink-flowing at the time of ejecting, therefore, the ink droplet cannot be ejected normally, which causes inferior ejecting such as dot omission. In addition, even when the air bubble 17 does not pass through the filter 9, the air bubble 17 is attached to the filter 9 by the ink-flowing at the time of ejecting, and thus the pressure loss of the filter 9 increases, thereby causing printing defects.

Therefore, the air bubble 17 in the channel space at the upstream of the filter 9 is forced to pass through the filter 9 with the ink so as to be removed by suctioning the ink forcibly from the nozzle opening of the nozzle plate 15 with a suction pump at fixed intervals (See Japanese Patent Publication No. 2001-71525A, for example),

Even though the filter 9 has fine and twilled metal meshes having almost same diameters of apertures, there is no way to remove microscopic differences in size among the diameters of the apertures. If the diameters differ as described above, a position through which the air bubble 17 is ejected varies with the filter 9. Therefore, the ejectability of air bubble 17 varies with the filter 9 even in the same recording head. As well as the ejectability, the size of the air bubble 17 remaining in the channel space at the upstream of the filter 9 varies with the filter 9 even when the air bubble is suctioned in the same manner.

The above phenomenon arises from the behavior of the air bubble 17 at the time of suction as shown in Fig. 21. The air bubble 17 attached to the filter 9 by the ink flowing at the time of suction passes the filter 9 through a point, at which the air bubble 17 is ejected by the minimum pressure difference (for example, the point indicated by an arrow in this example), on the surface of the filter 9, and, when the air bubble 17 is ejected to a certain distance (for example, the portion indicated by a dashed line in the drawing), only the ink flows further from the point and the air bubble is not ejected any longer. Therefore, even when the suctioning force of the suction pump is made greater to improve ejectability of the air bubble, the air bubble 17 is not ejected completely, and ink is consumed vainly. As described above, if the size of the remaining air bubble 17 varies, the reliability or stability of a product becomes worse.

Meanwhile, if a filter having a low pressure-loss such as woven filter is used, since the ink flows well even with a small pressure difference, it becomes hard to eject the air bubble by suction. Even the recording head disclosed in Japanese Patent Publication No. 2001-71525A cannot suppress the differences of the remaining air bubble arising from the microscopic difference of the opening diameters of the filter 9. Considering the above situation, it is highly demanded to remove the difference of the remaining air bubble arising from the microscopic difference of the opening diameters of the filter 9.

However, there is no method of manufacturing a filter having a feature to remove the difference of the remaining air bubble arising from the microscopic difference of the opening diameters of the filter 9 at the present.

### SUMMARX OF THE INVENTION

It is therefore an object of the invention to provide a method of manufacturing a filter capable of removing the difference of the remaining air bubble arising from the microscopic difference of the opening diameters of the filter so as to improve the ejectability of air bubble during suction.

In order to achieve the above object, according to the invention, there is provided a method of manufacturing filters, comprising:
preparing a first sheet and a second sheet;
perforating first holes on the first sheet;
laminating the second sheet on the first sheet so as to cover at least the first holes, thereby forming a laminated body; and
punching the filters from the laminated body such that each of the filters comprises the first sheet formed with at least one of the first holes and the second sheet.

In the filter, the area of the first filter except for the first holes is formed in the high pressure-loss area, and the area of the second filter exposed from the first holes is formed in the low pressure-loss area. Furthermore, the high pressure-loss area, in which the pressure loss is large during the passage of the liquid, is provided in the peripheral portion of the filter surface adjacent to the upstream space of the channel, and the low pressure-loss area, in which the pressure loss is small during the passage of the liquid, is provided in the portion surrounded by the high pressure-loss area. For this reason, even though there are microscopic differences in size among the first holes, if the ink is suctioned in a state in which the air bubble is in the upstream space, the air bubble is smoothly and preferentially ejected from the low pressure-loss area. That is, the relative difference of the pressure loss between the high pressure-loss area provided in the peripheral portion of the filter and the low pressure-loss area surrounded by the high pressure-loss area. In above state, if the ink is suctioned in a state in which the air bubble is in the upstream space, since the high pressure-loss area is formed in the periphery of the filter, the pressure difference occurs between the upstream and the downstream of the filter to some extent. Accordingly, the air bubble flows toward the filter. In this case, since the strength of the ink flow in the low pressure-loss area surrounded by the high pressure-loss area is stronger than that in the high pressure-loss area, the air bubble pushed toward the filter is drawn into the low pressure-loss area and then is attached on the filter. After that, the air bubble is drawn into the filter. In this case, since the air bubble is ejected by lower pressure difference in the low pressure-loss area surrounded by the high pressure loss area than that in the peripheral high pressure-loss area, the air bubble attached on the filter is smoothly ejected from the low pressure-loss area to the downstream thereof.

As described above, even though there are microscopic differences in size among the aperture of the high pressure-loss area or the low pressure-loss area, the air bubble is smoothly ejected from the low pressure-loss area. Therefore, when the size of the air bubble remaining in the upstream space is reduced and thus the deviation thereof is also reduced, the reliability and stability of products are improved. In addition, since the air bubble can be reliably ejected by the small liquid flow, the quantity of the ink wastefully used is reduced during the suction operation for ejecting the air bubble. Accordingly, it is possible to effectively use the ink. Furthermore, as the amount of waste liquid is reduced, a tank of the waste liquid can be made small and devices such as a pump for performing the suction operation can be also made small. Therefore, it is advantageous to reduce the size of the apparatus.

According to the invention, it is possible to easily obtain the above-mentioned filter by combining the first filter and the second filter that have different effective hole diameters from each other, thereby improving the ejectability of air bubble at very low cost.

The holes may be perforated at a constant interval while the first sheet is moved in a first direction. In this case, each of the filters is punched while the laminated body is moved in the first direction.

With this configuration, the perforating and the punching can be performed continuously by moving in a first direction, therefore the filter can be obtained at an excellent productivity. In addition, the productivity can be further improved by performing the laminating sequentially and continuously.

The manufacturing method may further comprise perforating second holes in the vicinity of at least one of side ends of the first sheet in a second direction perpendicular to the first direction.

In this case, the first holes and the second holes are perforated by press working.

With this configuration, the first holes and the second holes are formed simultaneously by press working, therefore the positional accuracy of the first and the second holes is secured.

The second holes may be used to move the laminated body in the punching.

With this configuration, since the positional accuracy of the first holes and the second holes is secured when the first sheet is moved in a first direction, the punching accuracy can be secured.

Each of the second holes may be used to provide a reference position in the punching.

With this configuration, since the positional accuracy of the first holes and the second holes is secured in the punching, the punching accuracy can be secured.

The second sheet may be laminated on the first sheet so as not to cover the second holes arrayed.

With this configuration, since the second sheet has no influence on the positional accuracy of the positioning holes, the punching accuracy can be secured when the laminated portion of the laminated body is punched.

The second sheet is adapted to be subjected to sintering.

In this case, the first sheet and the second sheet are bonded to each other by sintering after the laminating.

With this configuration, it is easy to perform the laminating of the second sheet on the first sheet continuously. Therefore the productivity can be improved by performing the perforating and the laminating continuously. In addition, since sintering process and the bonding process can be performed simultaneously, the production efficiency or energy efficiency is improved.

The first sheet and the second sheet may be bonded to each other by welding an inner periphery portion of each of the hole of the first holes after the laminating.

With this configuration, it is possible to obtain a filter, in which the first and second sheets are bonded to each other with minimal amount of welding.

According to the invention, there is also provided a filter, comprising:
a first layer formed with at least one hole; and
a second layer laminated on the first layer so as to cover at least the hole,
wherein at least the second layer is adapted to be subjected to sintering; and
wherein the first layer and the second layer are bonded to each other by sintering.

Since at least the second filter is a sintered filter, and the first and second filters are bonded to each other by sintering, in addition to the above operation and effect, the process of forming the second filter by sintering and bonding process can be performed simultaneously, and thus therefore it is possible to obtain the filter of the invention with an excellent production efficiency and energy efficiency.

According to the invention, there is also provided a filter, comprising:
a first layer formed with at least one hole; and
a second layer laminated on the first layer so as to cover at least the hole,
wherein the first layer and the second layer are bonded to each other by welding at least an inner periphery portion of the hole.

Since the first and second filters are bonded to each other by welding at least the inner periphery of the opening hole of the first filter, in addition that the second filter of the invention has the above operation and effect, it is possible to obtain a filter, in which the first and second filters are bonded to each other with minimal amount of welding.

An effective hole diameter of the first layer may be smaller than the effective hole diameter of the second layer,

With this configuration, the above filter can be obtained easily by combining the first and second layers having different effective hole diameters, and thus the ejectability of air bubble can be improved at low cost.

An effective hole diameter of the first layer may be larger than the effective hole diameter of the second layer,

With this configuration, the above filter can be obtained easily by combining the first and second filters having different effective hole diameters, and thus the ejectability of air bubble can be improved at low cost.

An effective hole diameter of the first layer may be equal to the effective hole diameter of the second layer.

With this configuration, the above filter can be obtained easily by combining the first and second filters having substantially identical effective hole diameters, and thus the ejectability of air bubble can be improved at low cost. In this case, the cost can be reduced by using the same material for the first and second filters.

According to the invention, there is also provided a filter, comprising:
a first area having first pressure-loss; and
a second area having second pressure-loss which is lower than the first pressure loss,
wherein the first area and the second area are provided in a single layer of the layer.

According to the invention, there is also provided a filter, comprising:
a first layer including a first area having first pressure-loss and a second area having second pressure-loss which is lower then the first pressure loss; and
a second layer laminated on the first layer so as to cover at least the second area.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a perspective view of a recording device according to a first embodiment of the invention;
Fig. 2 is a section view of a recording head in the recording device;
Fig. 3A is a plan view of a filter in the recording head;
Fig. 3B is a section view of the filter;
Fig. 4 is an enlarged section view of a part of the recording head in the vicinity of the filter;
Fig. 5 is an enlarged section view of a part of a recording head according to a second embodiment of the invention;
Fig. 6 is a plan view of a filter in the recording head of Fig.5;
Figs. 7 and 8 are enlarged section view showing bubble trapping performed in the recording head of Fig. 2;
Figs. 9 and 10 are enlarged section view showing bubble trapping in the recording head of Fig. 5;
Fig. 11A is a side view showing a perforation process in a first example of a method for manufacturing the filter;
Fig. 11B is a plan view of a first sheet shown in Fig. 11A;
Fig. 11C is a side view of the first sheet, viewed from a widthwise direction thereof;
Fig. 12A is a side view showing a bonding process in the first example of the manufacturing method;
Fig. 12B is a plan view of a laminated body shown in Fig. 12A;
Fig. 12C is a side view of the laminated body, viewed from a widthwise direction threrof;
Fig. 13A is a side view showing a punching process in the first example of the manufacturing method;
Fig. 13B is a plan view of a laminated body shown in Fig. 13A;
Fig. 13C is a side view of the laminated body of Fig. 13A, viewed from a widthwise direction thereof;
Fig. 13D is a plan view of a filter punched out of the laminated body of Fig. 13A;
Fig. 13E is a side view of the filter shown in Fig. 13D;
Fig. 14A is a side view showing a bonding process in a second example of a method for manufacturing the filter;
Fig. 14B is a plan view of a laminated body shown in Fig. 14A;
Fig. 15A is a side view showing a perforating process in a third example of a method for manufacturing the filter;
Fig. 15B is a plan view of a first sheet shown in Fig. 15A;
Fig. 15C is a side view of the first sheet, viewed from a widthwise direction thereof;
Fig. 16A is a side view showing a bonding process in the third example of the manufacturing method;
Fig. 16B is a plan view of a laminated body shown in Fig. 16A;
Fig. 16C is a side view of the laminated body, viewed from a widthwise direction thereof;
Fig. 17A is a side view showing a process for forming positioning holes in the third example of the manufacturing method;
Fig. 17B is a plan view of a laminated body shown in Fig. 17A;
Fig. 17C is a side view of the laminated body of Fig. 17A, viewed from a widthwise direction thereof;
Fig. 18A is a side view showing a punching process in the third example of the manufacturing method;
Fig. 18B is a plan view of a laminated body shown in Fig. 18A;
Fig. 18C is a side view of the laminated body of Fig. 18A, viewed from a widthwise direction thereof ;
Fig. 18D is a plan view of a filter punched out of the laminated body of Fig. 18A;
Fig 18E is a side view of the filter shown in Fig. 18D;
Fig. 19 is a section view of a related-art recording head; and
Figs. 20 and 21 are enlarged section view showing bubble trapping performed in the related-art recording head.

### DETAILED DESCRIPTION OF THE EMBODIMENTS

Hereinafter, embodiments of the invention will be described in detail.

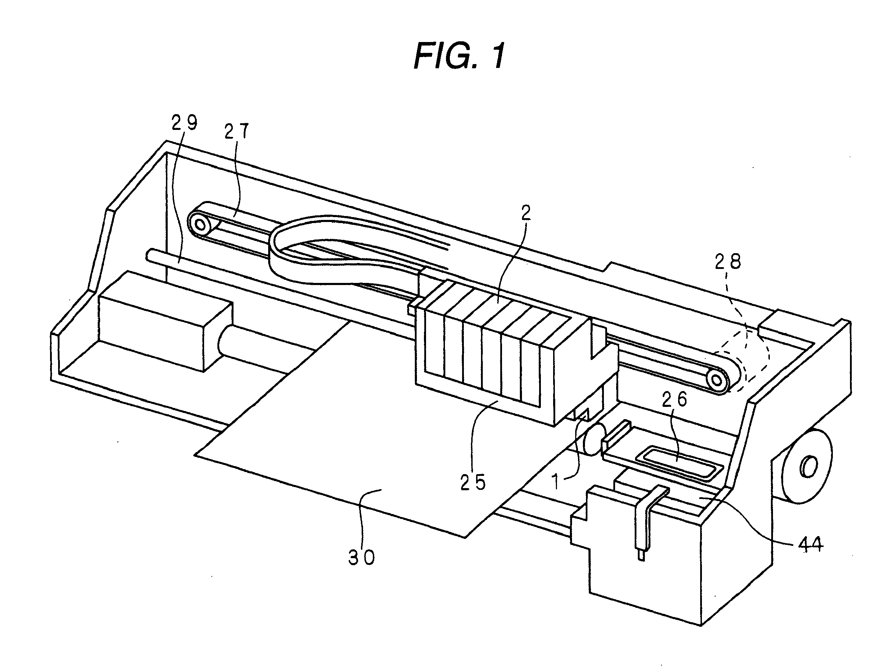

As shown in Fig. 1, a recording device according to a first embodiment comprises a carriage 25, which mounts an ink cartridge 2 serving as liquid supply source on the upper side thereof and a head body 1 for ejecting ink droplets on the lower surface thereof, and a capping unit 26 for sealing the head body 1.

The carriage 25 is coupled to a stepping motor 28 by way of a timing belt 27 and is guided by a guide shaft 29 so as to reciprocate in the widthwise direction of a recording sheet 30 such as paper. In addition, the carriage 25 has the head body 1 attached to the surface (the lower surface in the embodiment), which faces the recording sheet 30, of the carriage 25. Ink is supplied from the ink cartridge 2 to the head body 1, and thus the ink droplets are ejected on the upper surface of the recording sheet 30 while the carriage 25 is transferred. Accordingly, images or characters are printed on the recording sheet 30 in a dot matrix manner.

The capping unit 26 is provided at the non-printing area in the movement range of the carriage 25, and seals nozzle openings of the head body 1 so as to prevent the nozzle openings from being dried as much as possible during the period when the printing is paused. Furthermore, in a state that the nozzle openings are sealed by the capping unit 26, the ink is forcibly suctioned from the nozzle openings by applying negative pressure in a cap with a suction pump 44 in order to prevent the clogging of the nozzle openings or to eject air bubble as described below.

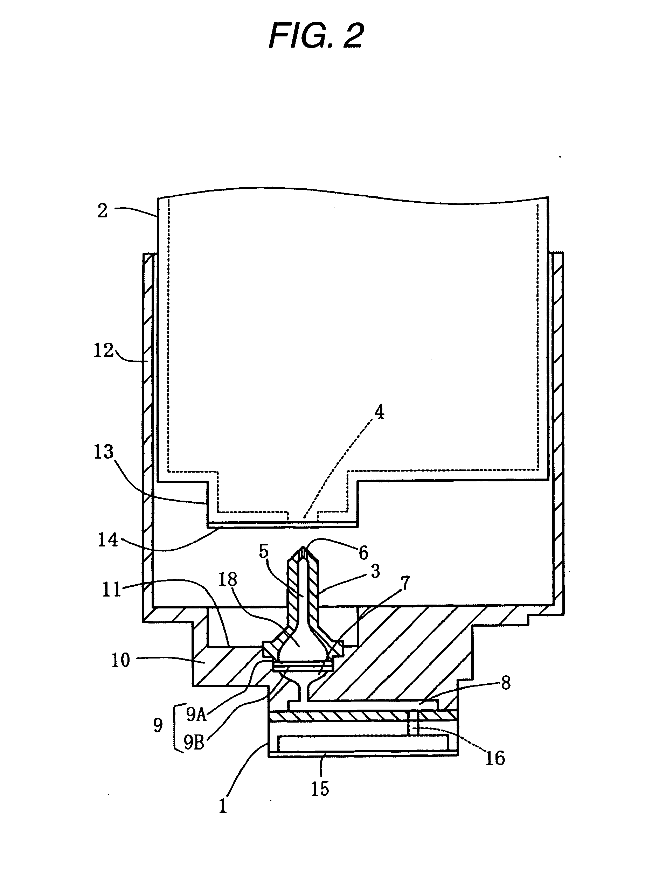

As shown in Fig. 2, the recording head is basically similar to that shown in Fig. 19, and hereinafter the same parts thereof are indicated by the same reference numerals to be described. The recording head includes the head body 1, and the ink cartridge 2 for storing ink to be supplied to the head body 1. Furthermore, the recording head is provided with an ink supply needle 3 and the ink cartridge 2 is provided with an ink supply opening 4 so that the ink is supplied to the head body 1 through the ink supply needle 3 inserted into the ink supply opening 4.

In more detail, the head body 1, which ejects ink droplets on the basis of printing signals, is attached to the lower surface of a head holder 10 of the recording head, and a cartridge case 12 in which the ink cartridge 2 is received is provided on the upper side of the head holder 10. A positioning protrusion 13 is formed on the lower surface of the ink cartridge 2, and the ink supply opening 4 is formed on the lower surface of the positioning protrusion 13. The opening of the ink supply opening 4 is sealed with a film 14 until the ink cartridge 2 is loaded on the recording head.

Meanwhile, a recess 11 into which the positioning protrusion 13 is fitted is formed on the upper surface of the head holder 10, and the ink supply needle 3 is extended from a bottom of the recess 11. In addition, Fig. 2 shows a state that the ink cartridge 2 is not loaded yet in the cartridge case.

The tip end of the ink supply needle 3 is formed in the shape of a circular cone so as to pierce the film 14 easily. An ink guide hole 6 is vertically bored at the slope face of the tip end. A first ink channel 5 communicating with the ink guide hole 6 is formed in the ink supply needle 3, and a second ink channel 7, which supplies the ink guided into the first ink channel 5 of the ink supply needle 3 to the head body 1, is formed in the head holder 10. The first ink channel 5 and the second ink channel 7 compose the channel of the invention, which leads the ink from the ink cartridge 2 to the head body 1.

The diameters of the first ink channel 5 and the second ink channel 7 are enlarged toward a filter 9. A filter 9 is provided at the connecting portion between the outlet of the first ink channel 5 and the inlet of the second ink channel 7. The filter 9 traps foreign material by filtering the ink, which is supplied from the ink cartridge 2 and passes through the first and the second ink channels 5 and 7.

The first ink channel 5 forms an upstream space 18 in the upstream of the filter 9. The upstream space 18 serves as a trapping space that is used to trap an air bubble 17 mixed into the ink cartridge 2 or the channel at the time of replacement of the ink cartridge 2. In addition, the diameters of the first and the second ink channels 5 and 7 are enlarged toward the filter 9. Accordingly, it is possible to enlarge the effective area of the filter 9, and to reduce pressure loss to some extent at the time of the ejecting the ink.

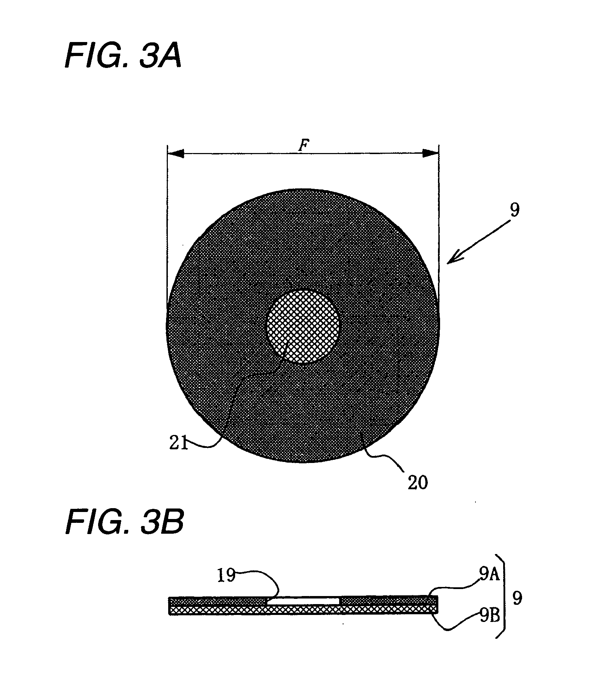

As shown in Fig. 3, in this embodiment, the filter 9 comprises a disk-shaped first filter 9A and a disk-shaped second filter 9B, which are laminated to each other. The first filter 9A has a circular aperture 19 on the filter surface and has a small effective hole diameter. The second filter 9B has a large effective hole diameter. The effective hole diameter represents a diameter of a circle having a same dimension as the apertures of the filter. When seen from the second filter 9B, the aperture 19 of the first filter 9A is covered with the second filter 9B. When seen from the first filter 9A, the second filter 9B is exposed from the aperture 19. The effective hole diameter of the first filter 9A is set so as to be relatively larger than that of the second filter 9B.

As described above, the disk-shaped first filter 9A having the aperture 19 is laminated on the disk-shaped second filter 9B that does not have an opening hole and has the same size as that of the first filter 9A. Accordingly, in the peripheral area, in which the first filter 9A and the second filter 9B overlaps each other, except for the aperture 19, the effective hole diameter of the first filter 9A having a small effective hole diameter acts so as to serve as a high pressure-loss area 20 in which the pressure loss is large during the passage of the liquid. In addition, since only the second filter 9B having a large effective hole diameter exists in the portion of the aperture 19 of the first filter 9A, the effective hole diameter of the second filter 9B having a large effective hole diameter acts so as to serve as a low pressure-loss area 21 in which the pressure loss is small during the passage of the liquid.

According to the above structure, in the filter 9, the high pressure-loss area 20 is provided in the peripheral portion of the filter surface adjacent to the upstream space 18 of the channel, and the low pressure-loss area 21 is provided in the portion surrounded by the high pressure-loss area 20. Each of the high pressure-loss area 20 and the low pressure-loss area 21 has a predetermined area so that a plurality of opening holes (mesh holes) of the filter is formed on the filter surface.

In addition, the first filter 9A and the second filter 9B are positioned at the bottom portion of the ink supply needle 3 so that the first filter 9A is positioned in the upstream of the second filter 9B, and the portion exposed to the upstream space 18 serves as an effective filter surface. In this embodiment, the effective filter surface is formed in the shape of a circle, and the effective diameter thereof is the diameter shown by F in Fig. 3. Furthermore, in the filter, the filter surface exposed to at least the upstream space 18 is disposed in a direction perpendicular to a direction to which the channel is disposed.

A filter, which is made of, for example, a metal mesh, a sintered metal, a ceramic sintered body, or the like, and has a circular aperture 19, can be used as the first filter 9A. Accordingly, it is possible to reliably trap foreign material, which has a diameter of 10 µm or more and flows from the ink cartridge 2, and a metal formed with fine mesh is suitably used as a filter. Meanwhile, if a material for trapping foreign material in the ink is used as the second filter 9B, the material is not particularly limited and various materials can be used as the second filter. For example, a metal mesh, a sintered metal, a ceramic sintered body, a glass wool, a glass wool membrane, or the like, can be used as the second filter.

The filter 9 is composed by laminating the disk shaped first filter 9A that has the aperture 19 and has a small effective hole diameter, and the disk shaped second filter 9B that covers the aperture 19 and has a large effective hole diameter. The area of the first filter 9A except for the aperture 19 is formed in the high pressure-loss area 20, and the area of the second filter 9B exposed from the aperture 19 is formed in the low pressure-loss area 21. Accordingly, it is possible to easily obtain the filter 9 of the invention by combining the first filter 9A and the second filter 9B that have different effective diameters from each other, thereby improving the ejectability of air bubble at low cost.

The first filter 9A and the second filter 9B are bonded to each other in a laminated state. The bonding state of the bonding portion between the first filter 9A and the second filter 9B is not particularly limited, and various bonding method can be used to bond the first filter and the second filter.

For example, the first filter 9A and the second filter 9B can be bonded to each other by sintering. That is, when a sintered filter made of a sintered metal or a ceramic sintered body is used as the second filter 9B, and the first filter 9A and the second filter 9B are bonded to each other by sintering. Accordingly, it is possible to simultaneously perform a process of forming the second filter 9B by sintering and a process of bonding the first filter 9A and the second filter 9B. For this reason, it is possible to obtain the filter 9 of the invention, which has high production efficiency and energy efficiency. Here, as the first filter 9A which is to be bonded to the second filter 9B that is a sintered filter by sintering, a sintered filter may be used as in the second filter 9B, or a metal mesh filter may be used.

In addition, the first filter 9A and the second filter 9B can be also bonded to each other by welding. That is, the first filter 9A and the second filter 9B can be bonded to each other by welding at least the inner periphery of the aperture 19 of the first filter 9A. Furthermore, the first filter 9A and the second filter 9B can also be bonded to each other by welding the outer periphery of the filter. Moreover, the first filter 9A and the second filter 9B can also be bonded to each other by welding both the inner and the outer peripheries of the filter.

When the first filter and the second filter are bonded to each other by welding, it is possible to obtain the filter 9 in which the first filter 9A and the second filter 9B are reliably bonded to each other. In particular, when the first filter and the second filter are bonded to each other by welding at least the inner periphery of the filter 9, it is possible to obtain the filter 9 in which the first filter 9A and the second filter 9B are bonded to each other with minimal amount of welding. As described above, in a case where the first filter 9A and the second filter 9B are bonded to each other by welding, the inner periphery of the aperture 19 or the outer periphery of filter 9 may be entirely welded, and may be partially welded at a plurality of points thereon.

Then, the communicating channel 8 communicating to the second ink channel 7 is formed on the lower surface of the head holder 10. The ink flowing into the communicating channel 8 is supplied to the head body 1 through the ink supply tube 16 provided in the head body 1.

Next, the positional relationship between the first ink channel 5, which includes the inner space of the ink supply needle 3, that is, the upstream space 18, or the second ink channel 7, and the low pressure-loss area 21 of the filter 9 will be described.

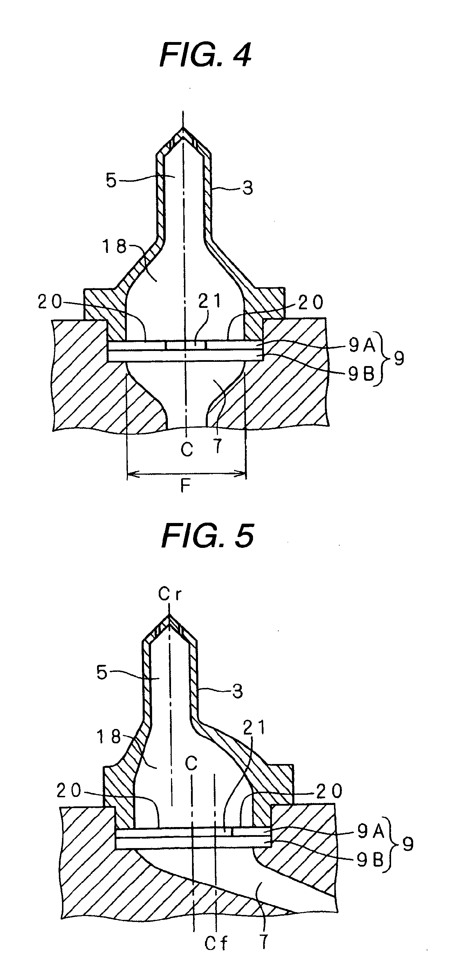

As shown in Fig. 4, in this embodiment, the first ink channel 5, which includes the ink supply needle 3 and the inner space of the ink supply needle, that is, the upstream space 18, is symmetric with respect to a central axis C thereof, and the central axis C of the first ink channel 5 including the upstream space 18 is in line with the central axis C of the effective filter surface of the filter 9.

In this case, the low pressure-loss area 21 is formed at the central portion of the filter surface so as to face the small-diameter portion of the upstream space 18, and the central axis C of the low pressure-loss area is in line with the central axis C of the first ink channel 5 including the upstream space 18 and the central axis C of the effective filter surface of the filter 9. For this reason, the low pressure-loss area 21 is disposed in the vicinity of the position on the filter surface with which the air bubble come in contact by the downward flow of the ink.

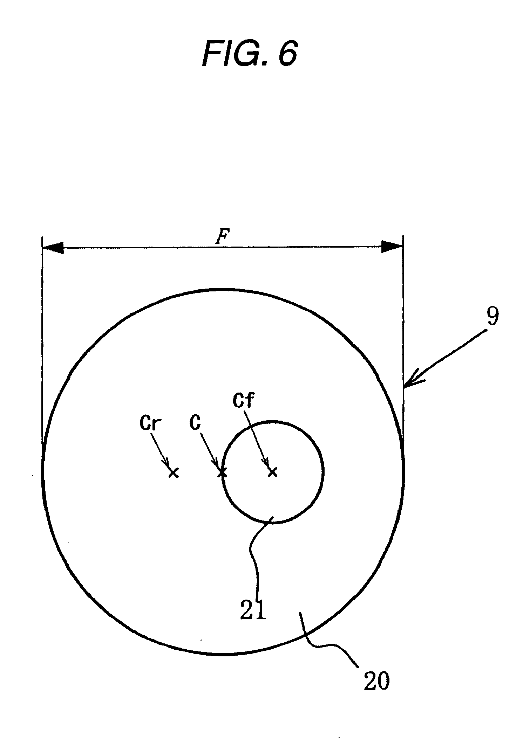

Next, a second embodiment of the invention will be described. Components similar to those in the first embodiment will be designated by the same reference numerals and repetitive explanations for those will be omitted. In this embodiment, as shown in Figs. 5 and 6 the first ink channel 5, which includes the ink supply needle 3 and the inner space of the ink supply needle, that is, the upstream space 18, is asymmetric with respect to a central axis C thereof. Furthermore, the central axis Cr of the first ink channel 5 not including the upstream space 18 is not in line with the central axis C of the effective filter surface of the filter 9. Moreover, the second ink channel 7 extends obliquely in the direction opposite to the direction in which the central axis Cr of the first ink channel 5 is shifted from the central axis C of the filter 9.

If the nozzle openings of the head body 1 keeps away from the ink supply needle 3, the deviation between the central axis C of the filter 9 and the central axis Cr of the small-diameter portion of the upstream space 18, which has a smaller diameter toward the tip end thereof, increases. In contrast, the structure that the nozzle openings of the head body 1 keep close to the ink supply needle 3 have a structure that is similar to that shown in Fig. 4.

In the second embodiment, the low pressure-loss area 21 is formed at a position opposite to the small-diameter portion of the upstream space 18 with respect to the central axis C of the filter surface, and the central axis Cf of the low pressure-loss area 21 is disposed at a position opposite to the central axis Cr of the small-diameter portion of the upstream space 18 with respect to the central axis C of the effective filter surface. The deviation between the central axis Cf of the low pressure-loss area 21 and the central axis C of the effective filter surface is set so as to be substantially equal to the deviation between the central axis C of the effective filter surface and the central axis Cr of the small-diameter portion of the upstream space 18. For this reason, the low pressure-loss area 21 is disposed in the vicinity of the position on the filter surface with which the air bubble come in contact by the downward flow of the ink.

Next, the operation of the recording head will be described.

As described above, in the recording head of the first embodiment, the upstream space 18 of the filter 9 serves as a trapping space that is used to trap the air bubble 17 mixed into the channel at the time of replacement of the ink cartridge 2. When the air bubble 17 grows up greatly and thus flows into the head body 1 or attached on the filter 9, printing failure is caused. For this reason, the capping unit 26 is used periodically so that the ink is suctioned from the nozzle openings forcibly and the air bubble is ejected.

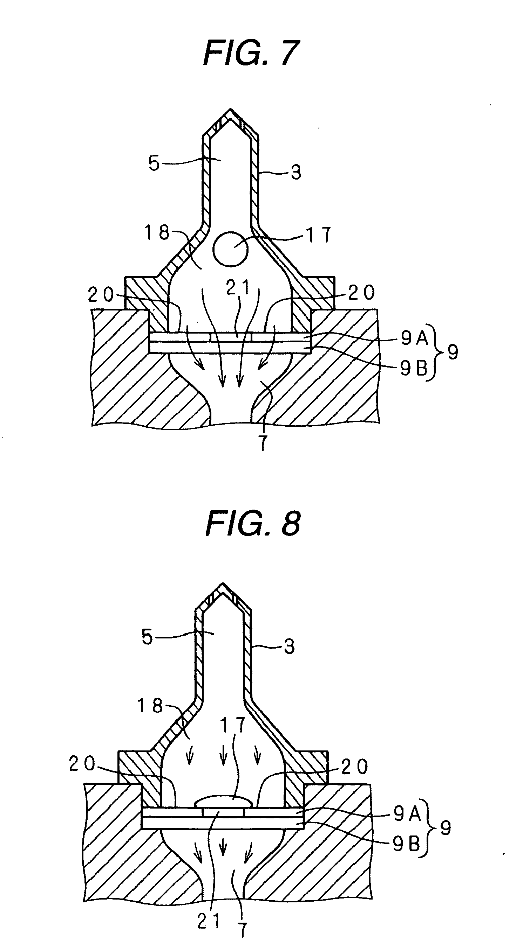

As shown in Fig. 7, before the beginning of the suction, the air bubble 17 is in the small-diameter portion of the upstream space, which has a smaller diameter toward the tip end thereof. When the suction is started from the above state, the flow (indicated by arrows) of the ink and the pressure difference is caused between the upstream and the downstream of the filter 9 by pressure loss. The air bubble 17 is pushed from the small-diameter portion toward the filter 9 by the pressure difference and the flow of the ink, and thus the descent of the air bubble is started. Then, as shown in Fig. 8, the air bubble is attached at the central portion (a portion facing the small-diameter portion) of the filter surface of the filter 9, and is deformed into a flat shape. If the air bubble 17 is deformed until the low pressure-loss area 21 is, covered with the air bubble, the pressure difference between the upstream and the downstream of the filter 9 increases rapidly. In this case, since the low pressure-loss area 21 has a larger effective hole diameter than the high pressure-loss area 20, the air bubble 17 passes through the filter toward the downstream thereof at the stage in which the pressure difference between the upstream and the downstream of the filter 9 is small.

In this case, since the low pressure-loss area 21 is formed at the central portion of the filter surface, the difference of the flow speed occurs in the high pressure-loss area 20 and the low pressure-loss area 21 of the filter 9. Accordingly, the liquid flow becomes stronger' at the central portion of the filter surface. The air bubble 17 floated above is drawn into the low pressure-loss area 21 in which the liquid flow is strong due to the strength difference between the strength of the liquid flow at the central portion of the filter surface, and the strength of the liquid flow at the periphery thereof. Then, the air bubble is first attached on the low pressure-loss area 21.

As described above, since the filter surface of the filter 9 is disposed in a direction perpendicular to a direction to which the channel is disposed, the air bubble 17 in the upstream space 18 flows toward the filter 9 by the liquid flow. Moreover, since the strength of the liquid flow in the low pressure-loss area 21 surrounded by the high pressure-loss area 20 is stronger than that in the high pressure-loss area 20, the air bubble 17 pushed toward the filter 9 is drawn into the low pressure-loss area 21 and then is attached on the filter 9. After that, the air bubble 17 is drawn into the filter 9, and then is smoothly ejected from the low pressure-loss area 21 to the downstream thereof. Accordingly, the air bubble 17 is smoothly ejected by the liquid flow.

The upstream space 18 of the channel is a space that has a smaller diameter from the filter surface toward the upstream thereof. Furthermore, the low pressure-loss area 21 is formed at the central portion of the filter surface so as to face the small-diameter portion of the upstream space 18, and there are many cases when the air bubble exists in the vicinity of the upper small-diameter portion in the upstream space 18 in a state in which there are almost no liquid flows. Since the low pressure-loss area 21 is formed at the central portion of the filter surface so as to face the small-diameter portion, it is possible to smoothly attach the air bubble in the vicinity of the small-diameter portion on the central low pressure-loss area 21, and to smoothly eject the air bubble at the time when the liquid flow occurs by the suction.

As described above, the low pressure-loss area 21 is disposed in the vicinity of the position on the filter surface with which the air bubble 17 comes in contact by the downward flow of the ink. Accordingly, when the ink begins to flow downward by the suction or the like, the air bubble 17 staying in the upper portion of the upstream space 18 is pushed by the liquid flow and comes in contact with the filter surface. However, since the low pressure-loss area 21 is formed on the filter surface, it is possible to smoothly eject the air bubble..

Furthermore, the first filter 9A having an aperture 19 is disposed adjacent to the upstream space 18 in the filter 9 of the recording head. Accordingly, the air bubble 17 is pushed from the small-diameter portion of the upstream space by the liquid flow so as to be attached on the low pressure-loss area 21 and so as to be deformed into a flat shape. Further, since a step is formed on the periphery of the aperture 19 of the first filter 9A, it is possible to prevent the air bubble from protruding out to the high pressure-loss area 20 to some extent. Therefore, the air bubble 17 can be smoothly ejected from the low pressure-loss area 21. In addition, since a step is not formed on the surface of the filter 9 adjacent to the downstream second ink channel 7, it is possible to prevent the occurrence of the problem that the air bubble passing through the filter 9 is crumbled into small air bubble and then the small air bubble is held and remains in the filter.

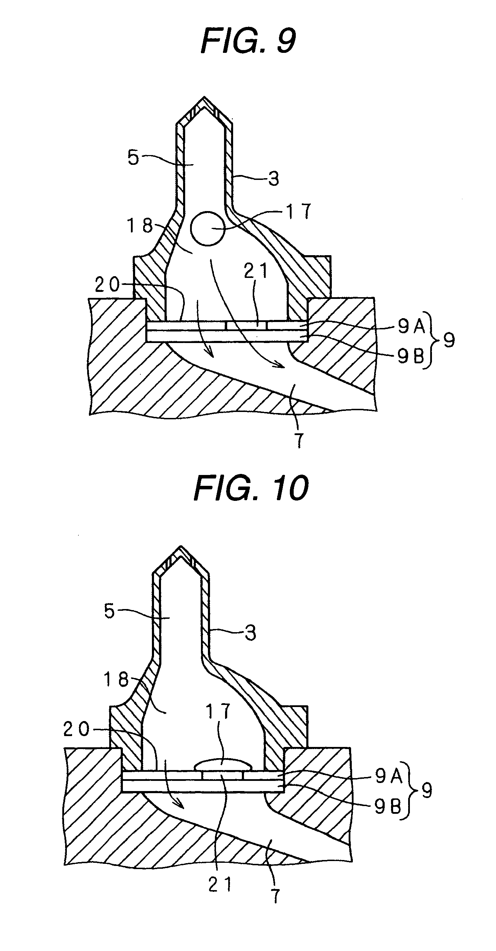

As shown in Fig. 9, in the recording head of the second embodiment, before the beginning of the suction, the air bubble 17 is in the small-diameter portion of the upstream space, which has a smaller diameter toward the tip end thereof. In this case, as described above, there is deviation between the central axis C of the filter surface and the central axis Cr of the small-diameter portion having the air bubble therein.

When the suction is started from the above state, the central axis Cf of the low pressure-loss area 21 is disposed at a position opposite to the central axis Cr of the small-diameter portion of the upstream space with respect to the central axis C of the filter surface, and the second ink channel 7 is inclined in the direction opposite to the direction in which the central axis Cr of the small-diameter portion is out of line with the central axis C of the filter 9. Accordingly, the ink flows obliquely (as indicated by arrows) toward the position opposite to the small-diameter portion with respect to the central portion of the filter surface. In this state, the difference of the flow speed occurs in the high pressure-loss area 20 and the low pressure-loss area 21, and the liquid flow becomes strong in the oblique direction. Accordingly, the air bubble 17 floated in the small-diameter portion is drawn into the low pressure-loss area 21 in which the liquid flow is strong, and is then attached first on the low pressure-loss area 21 (see Fig. 10).

As described above, the low pressure-loss area 21 is formed at a position opposite to the small-diameter portion of the upstream space 18 with respect to the central axis C of the filter surface. Accordingly, even though the small-diameter portion is positioned not at a position facing the central axis of the filter surface and but at a position shifted from the central axis of the filter surface, the liquid does not flow orthogonal to the filter surface at the central axis of the filter surface, and flows toward the position opposite to the small-diameter portion with respect to the central portion of the filter surface. For this reason, in a state in which there are almost no liquid flows, the air bubble 17 in the vicinity of the small-diameter portion is smoothly attached from the vicinity of the small-diameter portion onto the low pressure-loss area 21 at a position opposite to the small-diameter portion with respect to the central axis of the filter surface, when the liquid flow is generated by the suction and thus the air bubble can be more smoothly ejected.

Next, a method of manufacturing the filter 9 of the above embodiments will be described.

The filter 9 in which the first filter 9A having an opening hole and the second filter 9B are laminated to each other is obtained by preparing a first sheet 31 which is used to manufacture the first filter 9A having a relatively small effective hole diameter, and a second sheet 32 which is used to manufacture the second filter 9B having a larger effective hole diameter than that of the first filter 9A, and by performing the following processes (1) to (4).
(1) A perforating process of punching apertures 19 through the first sheet 31.
(2) A laminating process of laminating the second sheet 32 on the area, which includes at least the apertures 19 and the vicinity of the opening holes, of the first sheet 31 having the apertures 19 punched therethrough to form a laminated body 33.
(3) A bonding process of bonding the first sheet and the second sheet to each other in each of the areas Fe of the laminated body 33 to be at least the filter 9.
(4) A punching process of punching each of the areas Fe, which is used as the filter 9 having the aperture 19, from the bonded laminated portion of the laminated body 33.

As a first example of the manufacturing method, a metal mesh filter is used as the first filter 9A, and a sintered filter is used as the second filter 9B. In addition, a case, in which the band-shaped first sheet 31 and the band-shaped second sheet 32 are used and the band-shaped first sheet 31 or the band-shaped second sheet 32 and the laminated body 33 are continuously processed while being sequentially transferred in the longitudinal direction thereof, will be described.

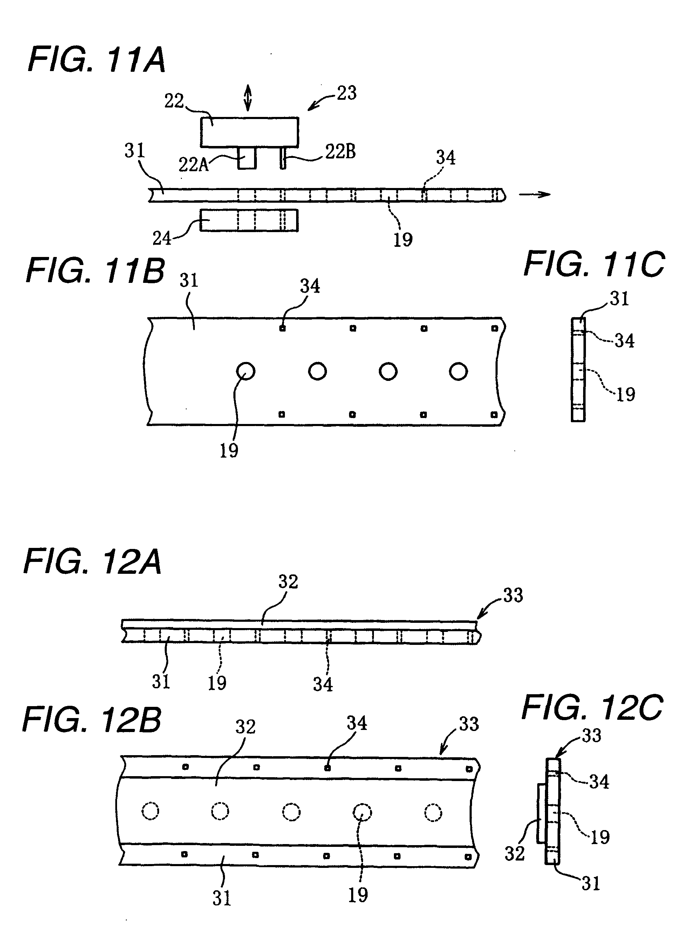

As shown in Fig. 11, the first sheet 31, which is a band-shaped metal mesh, is prepared, and the apertures 19 are punched by a press device 23 while the first sheet 31 is transferred in the longitudinal direction thereof at a predetermined pitch. Furthermore, during the press working performed by the press device 23, the apertures 19 are punched and positioning holes 34 are punched in the vicinity of the side edge of the first sheet 31 at the same time.

The press device 23 includes an upper die 22 and a lower die 24. The upper die 22 has a first punch 22A for punching the apertures 19, and two second punches 22B (one second punch is not shown in Fig. 11) for punching the positioning holes 34, which are disposed downward. The lower die 24 has die holes 24A and 24B, which correspond to the first punch 22A and the second punches 22B, respectively.

While the first sheet 31 is disposed between the upper die 22 and the lower die 24, and then is sequentially transferred in the longitudinal direction at a predetermined pitch, press working is performed by the upper die 22 and the lower die 24. Accordingly, the apertures 19 and the positioning holes 34 are simultaneously punched by one press working that is performed by the same press device.

By the press working, the apertures 19 are disposed in the vicinity of the middle of the band-shaped sheet 31 in the width direction so as to be arrayed in the longitudinal direction at a predetermined pitch. The positioning holes 34 are arrayed on both side portions of the first sheet so as to be located between each of the adjacent apertures 19 in the longitudinal direction at the predetermined pitch. In addition, each of the apertures 19 is formed in a circular shape, and each of the positioning holes 34 is formed in a rectangular shape.

Each of the positioning holes 34 is used to sequentially transfer the sheet in the punching process to be described below and is used to determine a punching position of each of the filters 9 in the punching process.

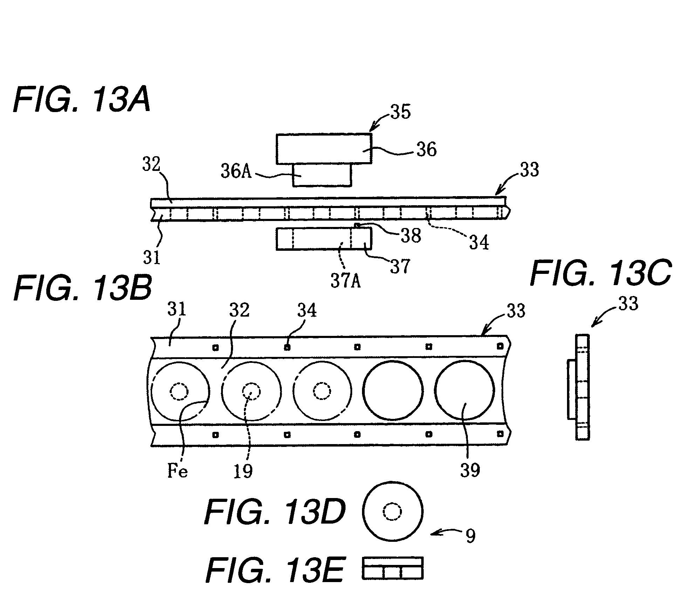

In the laminating process, as shown in Fig. 12, the second sheet 32 that is a green sheet adapted to be subjected to sintering is laminated on the first sheet 31 having the apertures 19 to obtain the laminated body 33. That is, the band-shaped first sheet 31 is transferred in the longitudinal direction thereof, and the band-shaped second sheet 32 is laid on the upper surface of the first sheet 31 while being transferred in the longitudinal direction to be supplied. In this case, the second sheet 32 is disposed in the middle of the first sheet 31 so as not to cover both side portions thereof having the positioning holes 34. In this state, the second sheet 32 covers the apertures 19, and covers each of the areas Fe (see Fig. 13) in the vicinity of apertures 19, which is used as the filter 9. In other words, the width of the second sheet 32 is set so as to be larger than at least that of the diameter of the filter 9, and the width of the first sheet 31 is set so as to be larger than that of the second sheet 32 by the width of the portion on which the positioning holes 34 are formed.

Next, the bonding process is performed. In the bonding process, the first sheet 31 and the second sheet 32 of the laminated body 33 are bonded to each other. The laminated body 33 in which the second sheet 32 is laminated on the first sheet 31 is placed in a sintering furnace and heated for a predetermined time period, and is sintered. Accordingly, the second sheet 32 is sintered, and the first sheet 31 and the second sheet 32 are bonded to each other at the same time. In the bonding process, the sintering may be performed in a batch furnace, and may be continuously performed in a continuous furnace while the laminated body 33 is transferred in the longitudinal direction thereof.

Accordingly, since the second sheet 32 is a green sheet, it is easy to continuously perform the laminating process of laminating the band-shaped second sheet 32 on the band-shaped first sheet 31. For this reason, the perforating process and the laminating process are sequentially and continuously performed, whereby it is possible to improve productivity. In addition, since the process of sintering the green sheet and the bonding process of bonding the first sheet 31 and the second sheet 32 to each other are simultaneously performed, production efficiency and energy efficiency can be made higher.

As shown in Fig. 13, each of the area Fe is punched by a punching device 35 while the sintered body 33 in which the first sheet and the second sheet are bonded in the bonding process is sequentially transferred in the longitudinal direction at a predetermined pitch.

The punching device 35 includes an upper die 36 and a lower die 37. The upper die 36 has a first punch 36A for punching the filters 9 that is disposed downward thereon, and the lower die 37 has a die hole 37A that corresponds to the first punch 36A. While the laminated body 33 is disposed between the upper die 36 and the lower die 37, and is sequentially transferred in the longitudinal direction at a predetermined pitch, press working is performed by the upper die 36 and the lower die 37. Accordingly, the filters 9 are punched out by punching the outer peripheral portion of the filters 9. In Fig. 13, reference numeral 39 indicates a punching hole formed by punching the filter 9.

In the punching process, the positioning holes 34 are used to determine a punching position, and thus the laminated body is sequentially transferred. Therefore, the transferring pitch is equal to the transferring pitch in the perforating process, and it is possible to punch the filters 9 at the same pitch as that of the apertures 19. Furthermore, since the punching is performed in a state in which a positioning protrusion 38 formed on the lower die 37 is fitted into the positioning hole 34, the punching position of the filter 9 is determined and then the filter is punched. In the first embodiment, the outer peripheral portion of the aperture 19 is punched concentrically with respect to the aperture 19 so that the aperture 19 is positioned at the central axis of the punched filter 9.

In this way, it is possible to obtain the filter 9 of the invention shown in Fig. 3. When the aperture 19 which is shifted from the central axis of the filter 9 (see Fig. 5) is manufactured, the punching position is adjusted with respect to the positioning hole 34 so that the central axis of the aperture 19 is shifted from the central axis of the punching circle, and then the punching is performed.

As described above, in a method of manufacturing the filter according to the invention, the sheet is sequentially transferred, and thus the perforating process of punching the apertures 19 and the punching process of punching the filter 9 are continuously performed. Therefore, it is possible to obtain the filter 9 with high productivity. In addition, since the laminating process, the bonding process, and the punching process are sequentially and continuously performed, it is possible to further improve productivity.

Furthermore, in the perforating process, since the apertures 19 and the positioning holes 34 are simultaneously punched by a single press working, it is possible to secure the positional accuracy of the apertures 19 and the positioning holes 34. The positioning holes 34 formed in this manner are used as positioning holes to sequentially transfer the laminated body in the punching process. Accordingly, when the first sheet 31 is sequentially transferred in the punching process, the positional accuracy between the apertures 19 and the positioning holes 34 is secured with the aid of the positioning holes 34. For this reason, the positional accuracy of the apertures 19 is secured, whereby it is possible to secure punching accuracy. In addition, the positioning holes 34 are positioning holes used to determine the punching position in the punching process. For this reason, when the punching position is determined with the aid of the positioning holes 34 in the punching process, the positional accuracy between the apertures 19 and the positioning holes 34 is secured with the aid of the positioning holes 34. Therefore, the positional accuracy of the apertures 19 is secured with respect to the filter 9 at the time of punching, whereby it is possible to secure punching accuracy. Moreover, in the laminating process, the second sheet 32 is laminated on the portion of the first sheet 31 so as not to cover both side portions thereof having the positioning holes 34. Therefore, the second sheet 32 does not affect the accuracy of the positioning holes 34, and it is possible to secure the punching accuracy at the time when the laminated portion of the laminated body 33 is punched.

Furthermore, although a green sheet for sintering is used as the second sheet 32, and a metal mesh is used as the first sheet 31 in the above-mentioned embodiments, a green sheet for sintering may be used as each of the second sheet 32 and the first sheet 31.

As a second example of the manufacturing method, the first sheet 31 and the second sheet 32 are bonded to each other by welding instead of sintering in the bonding process, and a metal mesh is used as each of the first sheet 31 and the second sheet 32. A perforating process and a laminating process are performed similar to those of the above-mentioned embodiment, and thus a laminated body 33 is formed.

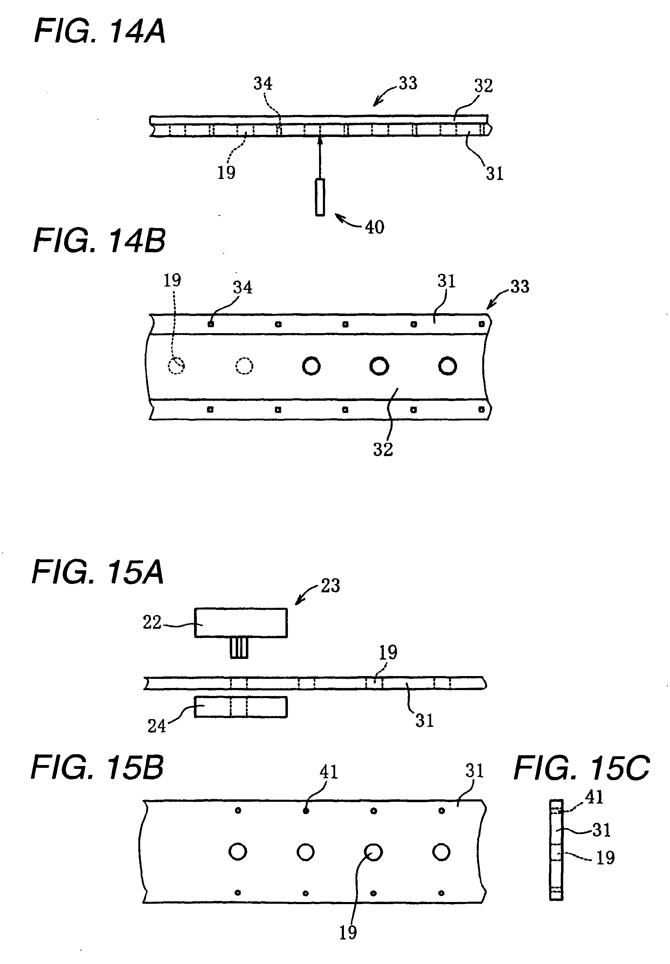

As shown in Fig. 14, the first sheet 31 and the second sheet 32 are bonded to each other by welding below the laminated body 33 by a laser welding machine 40. In this embodiment, the inner periphery of the aperture 19 is welded by a laser beam. As described above, since the first sheet 31 and the second sheet 32 are bonded to each other by welding at least the inner periphery of the aperture 19, it is possible to obtain the filter 9 in which the first filter 9A and the second filter 9B are bonded to each other with the minimal amount of welding.

In addition, the inner periphery of the aperture 19 may be entirely welded, or may be intermittently welded at a plurality of points thereon. Moreover, although only the inner periphery of the aperture 19 is welded in this embodiment, the outer periphery thereof to be punched can be welded. The other structure is the same as that of the above-mentioned first example.

As shown in Fig. 15, according to a third example of the manufacturing method of the invention, the apertures 19 are punched at a predetermined interval by a press device 23 while the band-shaped first sheet 31 is sequentially transferred in the longitudinal direction thereof at a predetermined pitch. Furthermore, during the press working by the press device 23, the apertures 19 are punched and reference holes 41 are perforated in the vicinity of the side edge of the first sheet 31 at the same time. The reference holes 41 are disposed on both side portions of the first sheet 31 at the predetermined pitch so as to be located between the adjacent apertures 19. Accordingly, it is possible to secure the positional accuracy of the apertures 19 and the reference holes 41 by simultaneously forming the apertures 19 and the reference holes 41.

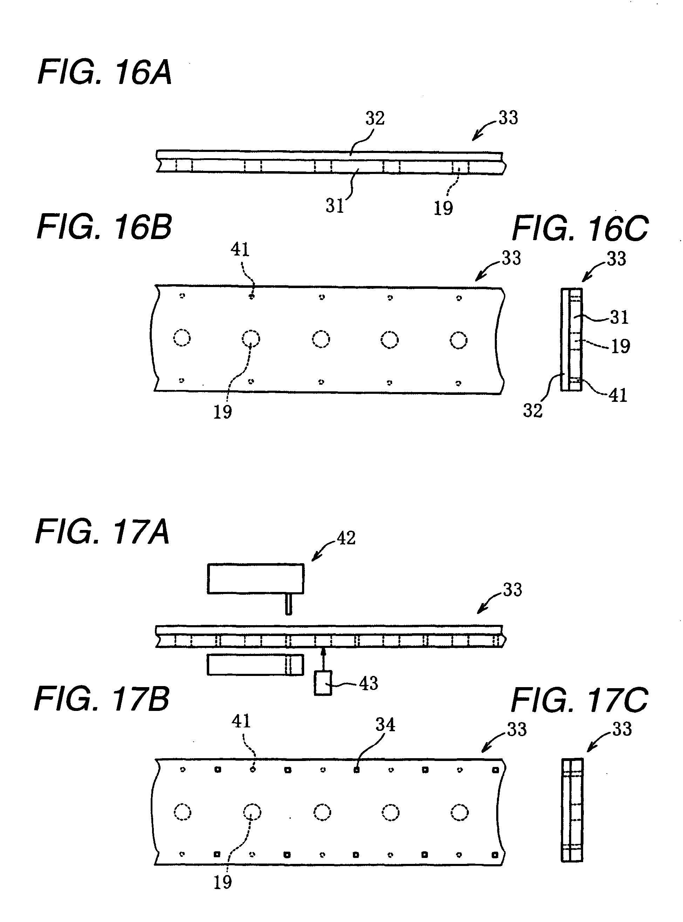

As shown in Fig. 16, the first sheet 31 has the same width as that of the second sheet 32, and the first sheet 31 and the second sheet 32 are laminated to each other so as to form the laminated body 33.

When a green sheet is used as each of the first sheet 31 and the second sheet 32, the sintering is performed to bond the first sheet and the second sheet to each other in the bonding process. Furthermore, when a metal mesh is used as each of the first sheet and the second sheet, the welding is performed to bond the first sheet and the second sheet to each other in the bonding process.

As shown in Fig. 17, the positioning holes 34 used to sequentially transfer the sheet in the punching process are perforated based on the reference holes 41 which are formed simultaneously with the apertures in the perforating process. A CCD camera 43 captures an image of the reference holes 41, and image data for the reference holes 41 obtained by the CCD camera 43 is processed. After that, the position of the laminated body 33 or a press device 42 is controlled by an X-Y positioning device (not shown) on the basis of the image data, and then the positioning holes are perforated with predetermined positional accuracy with respect to the reference holes 41. The positioning holes 34 are formed so as to pass through the first sheet 31 and the second sheet 32. Since the positioning holes 34 are punched by using the reference holes 41, which have the positional accuracy secured between the apertures 19 and themselves, as a reference, it is possible to secure the positional accuracy of the apertures 19 and the positioning holes 34.

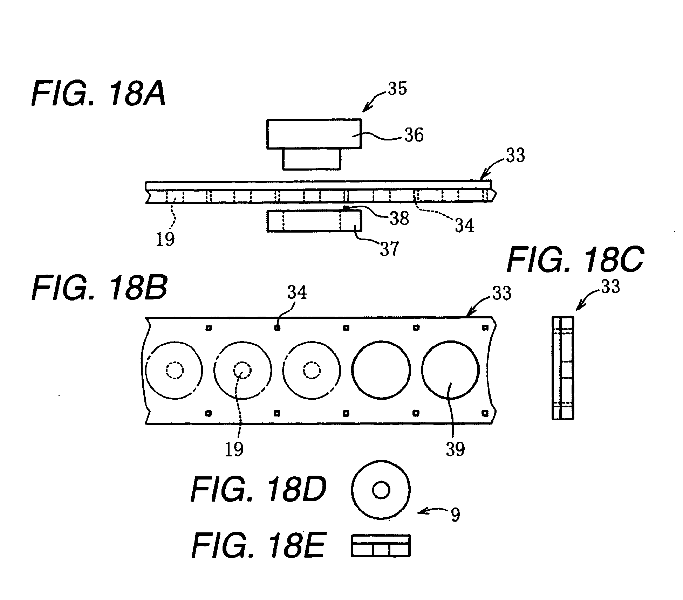

As shown in Fig. 18, in the punching process, while the laminated body 33 is sequentially transferred by the positioning holes 34 formed in above-mentioned manner, the each area Fe, which is used as the filter 9, is punched by a punching device 35. In this case, since the positional accuracy of the apertures 19 and the positioning holes 34 is secured as described above, it is possible to manufacture the filter 9 with high punching accuracy and to secure the arrangement accuracy of the aperture 19 on the filter 9.

In this way, it is possible to obtain the filter 9 of the invention shown in Fig. 3. When the aperture 19 which is shifted from the central axis of the filter 9 (see Fig. 5) is manufactured, the punching position is adjusted with respect to the positioning hole 34 so that the central axis of the aperture 19 shifted from the central axis of the punching circle, and then the punching is performed. The other structure is the same as that of the above-mentioned first or second embodiment.

As described above, according to the method of manufacturing the filter of the invention, the apertures 19 are perforated through the first sheet 31, the second sheet 32 is laminated on the first sheet 31 having the apertures 19, and then areas to be used as the filters 9 are punched. Accordingly, it is possible to obtain each of the filters 9 in which the first filter 9A having an opening hole and the second filter 9B are laminated to each other. Each of the filters 9 is composed of a disk-shaped first filter 9A and a disk-shaped second filter 9B, which are laminated to each other. The first filter 9A has a circular aperture 19 on the filter surface and has a small effective hole diameter. The second filter 9B covers the aperture 19 and has a large effective hole diameter.

In the filter 9, the area of the first filter 9A except for the aperture 19 is formed in the high pressure-loss area 20, and the area of the second filter 9B exposed from the aperture 19 is formed in the low pressure-loss area 21. Furthermore, the high pressure-loss area 20, in which the pressure loss is large during the passage of the liquid, is provided in the peripheral portion of the filter surface adjacent to the upstream space 18 of the channel, and the low pressure-loss area 21, in which the pressure loss is small during the passage of the liquid, is provided in the portion surrounded by the high pressure-loss area 20. For this reason, even though there are microscopic differences in size among the aperture 19, if the ink is suctioned in a state in which the air bubble 17 is in the upstream space 18, the air bubble 17 is smoothly and preferentially ejected from the low pressure-loss area 21. That is, the relative difference of the pressure loss between the high pressure-loss area 20 provided in the peripheral portion of the filter and the low pressure-loss area 21 surrounded by the high pressure-loss area 20. In above state, if the ink is suctioned in a state in which the air bubble 17 is in the upstream space 18, since the high pressure-loss area 20 is formed in the periphery of the filter, the pressure difference occurs between the upstream and the downstream of the filter 9 to some extent. Accordingly, the air bubble 17 flows toward the filter 9. In this case, since the strength of the ink flow in the low pressure-loss area 21 surrounded by the high pressure-loss area 20 is stronger than that in the high pressure-loss area 20, the air bubble 17 pushed toward the filter 9 is drawn into the low pressure-loss area 21 and then is attached on the filter 9. After that, the air bubble 17 is drawn into the filter 9. In this case, since the air bubble is ejected by lower pressure difference in the low pressure-loss area 21 surrounded by the high pressure-loss area 20 than that in the peripheral high pressure-loss area 20, the air bubble attached on the filter 9 is smoothly ejected from the low pressure-loss area 21 to the downstream thereof.

As described above, even though there are microscopic differences in size among the aperture 19 of the high pressure-loss area 20 or the low pressure-loss area 21, the air bubble is smoothly ejected from the low pressure-loss area 21. Therefore, when the size of the air bubble 17 remaining in the upstream space 18 is reduced and thus the deviation thereof is also reduced, the reliability and stability of products are improved. In addition, since the air bubble 17 can be reliably ejected by the small liquid flow, the quantity of the ink wastefully used is reduced during the suction operation for ejecting the air bubble 17. Accordingly, it is possible to effectively use the ink. Furthermore, as the amount of waste liquid is reduced, a tank of the waste liquid can be made small and devices such as a pump for performing the suction operation can be also made small. Therefore, it is advantageous to reduce the size of the apparatus.

According to the invention, it is possible to easily obtain the above-mentioned filter by combining the first filter 9A and the second filter 9B that have different effective hole diameters from each other, thereby improving the ejectability of air bubble at very low cost.

In each of the embodiments, although the effective hole diameter of the first filter 9A is set so as to be smaller than that of the second filter 9B, the combination of the effective hole diameters of the first filter 9A and the second filter 9B is not limited thereto.

That is, the effective hole diameter of the first filter 9A can be set so as to be larger than that of the second filter 9B, and it is possible to easily obtain the above-mentioned filter by combining the first filter 9A and the second filter 9B that have different effective hole diameters from each other, thereby improving the ejectability of air bubble at very low cost.

In addition, the effective hole diameter of the first filter 9A can be set so as to be substantially equal to that of the second filter 9B, and it is possible to easily obtain the above-mentioned filter by combining the first filter 9A and the second filter 98 that have a substantially same effective hole diameter from each other, thereby improving the ejectability of air bubble at very low cost. In this case, if the first filter 9A and the first sheet 31 are made of the same material, and the second filter 9B and the second sheet 32 are made of the same material, it is possible to reduce the manufacturing cost.

In each of the embodiments, in the filter 9, one first filter 9A and one second filter 9B are laminated to each other. However, the invention is not limited thereto. That is, two or more first filters 9A and two or more second filters 9B may be laminated to each other, whereby it is possible to obtain the filter 9 in which total three or more filters may be laminated. Even in this case, the same advantages is obtained.

In addition, in the filter 9, two or more filters are laminated to each other. However, the invention is not limited thereto. That is, one sheet of filter comprising a first area having a high pressure-loss and a second area having a low pressure-loss may be use as the filter in this invention. Even in this case, it is possible to obtain the same advantages of the filter described in each of the embodiments.

## Claims

1. A method of manufacturing filters, comprising:
preparing a first sheet and a second sheet;
perforating first holes on the first sheet;
laminating the second sheet on the first sheet so as to cover at least the first holes, thereby forming a laminated body; and
punching the filters from the laminated body such that each of the filters comprises the first sheet formed with at least one of the first holes and the second sheet.

2. The manufacturing method as set forth in claim 1,
wherein; the holes are perforated at a constant interval while the first sheet is moved in a first direction; and each of the filters is punched while the laminated body is moved in the first direction.

3. The manufacturing method as set forth in claim 1 or 2, further comprising perforating second holes in the vicinity of at least one of side ends of the first sheet in a second direction perpendicular to the first direction, wherein the first holes and the second holes are perforated by press working.

4. The manufacturing method as set forth in claim 3,
wherein the second holes are used to move the laminated body in the punching.

5. The manufacturing method as set forth in claim 3 or 4,
wherein each of the second holes is used to provide a reference position in the punching.

6. The manufacturing method as set forth in claim 3, 4 or 5, wherein the second sheet is laminated on the first sheet so as not to cover the second holes arrayed.

7. The manufacturing method as set forth in any one of the preceding claims, wherein:
the second sheet is adapted to be subjected to sintering; and
the first sheet and the second sheet are bonded to each other by sintering after the laminating.

8. The manufacturing method as set forth in any one of the preceding claims 1 to 6, wherein the first sheet and the second sheet are bonded to each other by welding an inner periphery portion of each of the hole of the first holes after the laminating.

9. A filter, comprising:
a first layer formed with at least one hole; and a second layer laminated on the first layer so as to cover at least the hole,
wherein at least the second layer is adapted to be subjected to sintering; and
wherein the first layer and the second layer are bonded to each other by sintering.

10. A filter, comprising:
a first layer formed with at least one hole; and a second layer laminated on the first layer so as to cover at least the hole,
wherein the first layer and the second layer are bonded to each other by welding at least an inner periphery portion of the hole.

11. The filter as set forth in claim 9 or 10, wherein an effective hole diameter of the first layer is smaller than the effective hole diameter of the second layer.

12. The filter as set forth in claim 9 or 10, wherein an effective hole diameter of the first layer is larger than the effective hole diameter of the second layer.

13. The filter as set forth in claim 9 or 10, wherein an effective hole diameter of the first layer is equal to the effective hole diameter of the second layer.

14. A filter, comprising:
a first area having first pressure-loss; and
a second area having second pressure-loss which is
lower than the first pressure-loss,
Wherein the first area and the second area are provided in a single layer of the filter.

15. A filter, comprising:
a first layer including a first area having first pressure-loss and a second area having second pressure-loss which is lower than the first pressure loss; and a second layer laminated on the first layer so as to cover at least the second area.
